Europäisches Patentamt

European Patent Office

Office européen des brevets

(19)

(11) EP 1 234 404 B1

(12) **EUROPEAN PATENT SPECIFICATION**

(45) Date of publication and mention
of the grant of the patent:
**04.01.2006 Bulletin 2006/01**

(51) Int Cl.:
*H04L 9/30* (2006.01)

(21) Application number: **00993073.6**

(22) Date of filing: **22.11.2000**

(86) International application number:
**PCT/US2000/032126**

(87) International publication number:
**WO 2001/047178 (28.06.2001 Gazette 2001/26)**

(54) **GENERATION OF A MATHEMATICALLY CONSTRAINED KEY USING A ONE-WAY FUNCTION**

ERZEUGUNG EINES MATHEMATISCHEN EINGESCHRÄNKTEN SCHLÜSSELS UNTER VERWENDUNG EINER EINWEGFUNKTION

GENERATION D'UNE CLEF MATHEMATIQUEMENT CONTRAINTE A L'AIDE D'UNE FONCTION UNIVOQUE

(84) Designated Contracting States:
**AT BE CH CY DE DK ES FI FR GB GR IE IT LI LU MC NL PT SE TR**

(30) Priority: **29.11.1999 US 450194**

(43) Date of publication of application:
**28.08.2002 Bulletin 2002/35**

(73) Proprietor: **GENERAL INSTRUMENT CORPORATION**
**Horsham, Pennsylvania 19044 (US)**

(72) Inventor: **SPRUNK, Eric, J.**
**Carlsbad, CA 92009 (US)**

(74) Representative: **Regelmann, Thomas**
**HOEGER, STELLRECHT & PARTNER**
**Patentanwälte**
**Uhlandstrasse 14 c**
**70182 Stuttgart (DE)**

(56) References cited:
**EP-A- 0 534 420**

• **MENEZES, OORSCHOT, VANSTONE: "HANDBOOK OF APPLIED CRYPTOGRAPHY" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, XP002178884 ISBN: 0-8493-8523-7**
• **"LOOK-AHEAD PROCESSING FOR HIGH SPEED RSA CRYPTOGRAPHIC KEY PAIR GENERATION" IBM TECHNICAL DISCLOSURE BULLETIN, IBM CORP. NEW YORK, US, vol. 37, no. 1, 1994, pages 115-118, XP000428715 ISSN: 0018-8689**

**Description**

**BACKGROUND OF THE INVENTION**

The present invention relates to a method and apparatus for generating a cryptographic key. A one-way function and prime testing is used to provide a modulus that is highly secure. For example, a modulus for use with the Rivest, Shamir, and Adleman (RSA) public key encryption algorithm may be provided. The invention may be used, e.g., in encrypting data that is communicated to a decoder population via a broadband communication network such as a satellite distribution network or cable television network, or used with any other security device.

The document MENEZES, OORSCHOT, VANSTONE: "HANDBOOK OF APPLIED CRYPTOGRAPHY" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, XP002178884 ISBN: 0-8493-8523-7 deals with hardware-based and software-based random bit generators. Also, de-skewing techniques are described.

The document "LOOK-AHEAD PROCESSING FOR HIGH SPEED RSA CRYPTOGRAPHIC KEY PAIR GENERATION" IBM TECHNICAL DISCLOSURE BULLETIN, IBM CORP. NEW YORK, US, vol. 37, no. 1, 1994, pages 115-118, XP000428715 ISSN: 0018-8689 discloses a high performance method for generating cryptographic key pairs for the RSA public key encryption algorithm.

EP 0 534 420 A2 discloses a data processing system, program and method for managing a public key cryptographic system which includes a public key, private key pair generator. The method includes the step of generating a first public key, private key pair using a first seed value known to a user, the first seed value being generated from a passphrase. A first random number is generated using the first seed value and applied to generating the first key pair. The method then generates a first control vector defining a first use of the first public key, private key pair. Then, it is continued with a step of generating a second public key, private key pair using a second seed value unknown to the user, the second seed value being a true random number. The second random number is generated using the second seed value in a pseudorandom number generator and applied to generating the second key pair. The method generates a second control vector defining a second use of the second public key, private key pair. The method then controls the use of the first public key, private key pair using the first control vector and controls the use of the second public key, private key pair with a second control vector.

Video, audio and other data that is communicated to a decoder population in a broadband communication network is encrypted under one or more cryptographic keys at the headend to provide access control to the data. Seed data is generated and loaded into addressable receivers at the time of their manufacture. This allows them to subsequently process messages containing these cryptographic keys once they are deployed in a communication network. However, a hostile attacker may be able to obtain the seed data through various known attack techniques, such as chip decapsulation, probing, and the like. Once an attacker has this seed information, he could potentially decrypt all messages sent to that receiver, thereby compromising that receiver permanently or for a long period.

One way to overcome this problem at the time the receiver is manufactured is for the receiver to process a pre-seed using a predetermined function to derive the seed. Then, even if the pre-seed is subsequently discovered by an attacker, the attacker cannot obtain the seed unless the attacker knows the predetermined function.

This predetermined function may be a one-way function. A one-way function is essentially irreversible such that input data that is processed through the one-way function cannot be recovered by an unauthorized person. A one-way function may comprise a distribution hash function, where input data is encrypted under one or more encryption algorithms, and the resulting encrypted data is hashed with the input data, for example, using an exclusive-or (XOR) function. Thus, given a seed, a pre-seed that is processed by a one-way function to obtain a seed is essentially impossible to recover in a trial-and-error attack without knowledge of the one-way function.

Generally, an attacker who reads stored information, e.g. from a chip, rather than the pre-seed load message used to generate the stored information, is faced with working backwards through a one-way function (OWF) to recreate the pre-seed load message. Since the attacker cannot perform this one-way function reversal, and since he does not have the original pre-seed load message used to load pre-seeds into the chip, he cannot load valid seeds into the chip in a receiver. This use of a OWF generally occurs only in a factory in which decoders are produced, not in a network. Thus, decoders in the field do not usually receive messages that employ this technique.

The above technique of providing a pre-seed to the decoder is appropriate when the pre-seed is a bit string or key that corresponds, for example, to the Data Encryption Standard (DES). A valid DES key comprises essentially any random, string of 56 bits. Accordingly, a DES key that is processed by a one-way function results in output data that can be used as another DES key. While the DES key can provide adequate security in many cases, different security properties associated with public key encryption can be achieved with an RSA key.

The RSA Public Key Cryptosystem is a widely used standard in public key cryptography. With this system, a message Y is encrypted to obtain the cyphertext $X=Y^{K2} \pmod{N}$. A public key is defined by (K2,N), where K2 is the public exponent, and the modulus N is the product of two large prime numbers, P and Q. Additionally, K2<N, and K2 is relatively prime to Euler's Totient, $\varphi=(P-1) \cdot (Q-1)$. Two integers are relatively prime to one another if they have no prime factors in common. That is, their only common factor is one. The security of the system is based on the difficulty in factoring N into its two components, P and Q. In the deciphering operation, the message Y is recovered from the cyphertext X as $Y=X^{K1}$ (mod N), where K1 is the private key or private exponent, and $K2^{-1}=K1 \bmod(\varphi)$.

A valid RSA key K2 that is processed by a one-way function is highly unlikely to result in another valid RSA key since the occurrence of prime numbers becomes less and less likely for large numbers, e.g., 56 bit and longer bit strings.

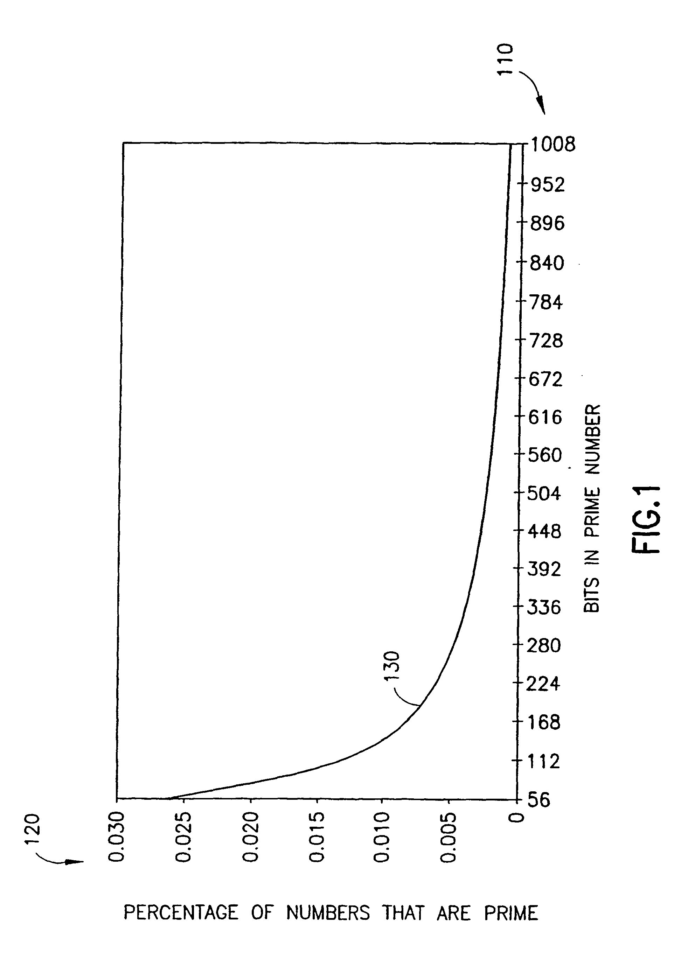

FIG. 1 shows a known asymptotic relationship between bit length and the percentage of numbers that are prime. Specifically, the Prime Number Theorem states that, for a value X, the number of primes less than X is asymptotically equal to X divided by the logarithm of X. An x-axis 110 shows the number of bits in a prime number, while a y-axis 120 shows the percentage of numbers that are prime. For example, for a 56-bit binary number, only about 0.025% of all numbers are prime. As shown by the curve 130, this proportion decreases with bit length. The probability of a randomly-generated number being prime follows this same proportion, even if a one-way function is used in such random generation. It is very unlikely that the processing of an RSA key with a one-way function would produce a valid RSA key. Similarly, since the output of a one-way function is best modeled as a random number, it is unlikely that an output will satisfy any improbable mathematical constraint, primality being only one example.

Accordingly, it would be desirable to provide a computationally efficient system for generating mathematically constrained keys, such as valid RSA keys, using a one-way function. Such a system should provide a highly secure encryption key, e.g. a pre-seed, that is protected by both the selected encryption system and a one-way function.

It would further be desirable to provide a communication network with a transmission site or headend wherein mathematically constrained values, such as an RSA public exponent K2 and modulus $N=P \cdot Q$, are produced using the same or different one-way functions, and where data such as video, audio or other data is encrypted according to the RSA system under K2 and N.

It would be desirable to provide a pre-seedload message with pre-seed data that is also processed by a one-way function in a chip (i.e., integrated circuit) at a receiver or decoder for use in deriving K1 and N to decrypt the encrypted video or other data.

The present invention provides a system having the above and other advantages.

## SUMMARY OF THE INVENTION

The present invention relates to a method and apparatus for generating a mathematically constrained key, such as an RSA cryptographic key or modulus, using a one-way function. This generated key satisfies a mathematical constraint condition, such as primicity.

Pre-seed data is processed at an encoder at the time of manufacture, using a one-way function and tested to determine if the processed data meets some mathematically constrained conditions, such as being a prime number. If so, the tested number is used, for example, to form an RSA modulus N and cryptographic key K2. Data Y, such as video, audio or other data in a cable or satellite television network, for example, is subsequently encrypted to obtain the encrypted data $X=Y^{k2}$(mod N), and transmitted over the network to a decoder population.

Additionally, specific authorized decoders have chips that store the RSA keys that result from the one-way function processing of pre-seed data by that decoder at the time of decoder manufacture. The encrypted data X is decrypted using these RSA keys to recover the clear data $Y=X^{K1}$(mod N).

Preferably, the pre-seed data is obtained by subdividing a random bit string into several segments, then independently processing each segment with a one-way function to obtain corresponding processed segments. The processed segments are assembled to obtain a processed bit string which is then tested as a whole for the mathematically constrained condition, such as primicity.

Generally, the present invention is not specific for RSA, but is applicable anywhere a mathematically constrained key must be generated. RSA keys, which are based on prime numbers, are only one example of a mathematically constrained key. Other constraints of an arbitrary nature for existing and emerging algorithms, such as Elliptic Curve Cryptosystems, are meant to be encompassed.

A specific encoding method illustrated herein for generating a cryptographic key, K2, includes the step of generating a first set of random values pre-P, such as a 512-bit bit string. At least a portion of the values pre-P are processed with a first one-way function to obtain a corresponding value P. Preferably, pre-P includes sets of values (e.g., bits) that are processed individually by the one-way function. The value P is tested for satisfaction of a mathematical constraint such as primicity (primeness). If P does not meet the constraint, the above steps are repeated to form a new value P until the constraint is met. The key K2 is ultimately formed as a function of the value P and other variables P and K1.

In particular, a second set of random values pre-Q may be processed analogously to the pre-P values to derive a value Q that also satisfy the mathematical constraint. A modulus $N=PQ$, and Euler's Totient $\varphi=(P-1)(Q-1)$ are then formed.

Next, a third set of random values pre-K1 are processed using a one-way function to derive a value K1. It is then determined whether K1 is relatively prime to φ. This condition is satisfied if Euclid's Algorithm indicates that the greatest common divisor (GCD) of K1 and φ is one. If the condition is not satisfied, additional values of K1 are formed until the condition is met.

The key K2 may then be formed using Euclid's Extended Algorithm, i.e., $K2=K_1^{-1} \pmod{\varphi}$. Data Y can be encrypted under K2 and N, e.g., using $X=Y^{K2} \pmod{N}$. For example, data such as television programming may be encrypted at an encoder.

Also in accordance with the present invention, a decoding method is provided for generating a cryptographic key, K1. The values pre-P, pre-Q, and pre-K1 that were ultimately used at the encoder to derive K2 are provided to a decoder. At the decoder, pre-P and pre-Q are processed with the previously used one-way functions to form P and Q, respectively. The modulus N=PQ is then formed as before.

The third set of random values pre-K1 that were used at the encoder are processed using the same one-way function to derive the value K1. The encrypted data can then be decrypted using K1 and N. For example, the data X can be decrypted using $Y=X^{K1} \pmod{N}$.

The encrypted message X may be transmitted from the encoder to the decoder via a broadband communication network with a decoder population P, pre-Q, and pre-K1 may be stored as a seedload message locally in a chip at the decoder, e.g., internally or in a smart card.

A corresponding encoding apparatus and decoding apparatus are also presented.

## BRIEF DESCRIPTION OF THE DRAWINGS

FIG. 1 illustrates the Prime Number Theorem.

FIG. 2 illustrates a broadband communication network with an encoder and decoder in accordance with the present invention.

FIG. 3 illustrates an encoder in accordance with the present invention.

FIG. 4(a) illustrates the first part of an encoding method in accordance with the present invention.

FIG. 4(b) illustrates the second part of the encoding method of FIG. 4(a) in accordance with the present invention.

FIG. 5 illustrates a decoder in accordance with the present invention.

FIG. 6 illustrates a decoding method in accordance with the present invention.

## DETAILED DESCRIPTION OF THE INVENTION

The present invention relates to a method and apparatus for generating a mathematically constrained key, such as an RSA cryptographic key and modulus, using a one-way function and testing for the mathematically constrained condition, such as primeness.

A conditional access (CA) system, such as a broadband cable television or satellite distribution network, delivers information in messages to trusted components that store that information. Attackers of a CA system can sometimes illicitly clone or copy trusted components by removing and resubmitting information using that component's normal message delivery syntax and processing. It is therefore desirable for the information stored to exist in a form that prevents its re-use as a legitimate information delivery message. This problem is referred to as an "Information Delivery and Reuse Problem".

A typical one-way function (OWF) has one or more inputs IN1, IN2, ..., and an output OUT. Its salient one-way characteristics are:

- Given all inputs IN1, IN2, ...., it is easy to calculate OUT; but
- Given OUT and at least one missing input IN1 or IN2 or ..., it is computationally infeasible to calculate the missing input.

Computational infeasibility means that no method is known to be better than simply trying all possible values of the missing variable to determine the correct one.

In the present invention, a simple OWF with one input and one output can be used, where OUT = OWF(IN) is easy to calculate, but $IN = OWF(OUT)^{-1}$ is not.

In broadband communication networks such as cable television networks, movies, sports events and other video, audio and data ("services") are provided to authorized decoders in a decoder population based on payment of a fee. To prevent unauthorized persons from viewing or otherwise using a service, the service is encrypted under one or more cryptographic keys. Seed or pre-seed data (e.g., a seedload message) is provided at authorized decoders for use in generating the cryptographic keys for decrypting the encrypted service. For example, the seed or pre-seed data may be stored in chips, internal to the decoders or in smart cards. Accordingly, the most sensitive information in many decoders is the seeds. Seeds, along with the public Unit Address, which is a unique identifier for each decoder, comprise the unique and unchangeable identity of a component. All cryptographic functions within the decoders may be based on seeds in some fashion.

In the past, attackers have had the goal of copying or cloning security components by extracting seeds from one component and loading them into multiple others. This process is often referred to as "cloning". Some decoders are designed to accept a seedload message of the following form:

$$\text{Unit Address + Seed-1 + Seed-2 + Seed-3 + Seed-4}$$

Four seeds are provided in this message only as an example. Fewer or more may be used. The five pieces of information loaded by this message may be placed unaltered in five areas of a decoder's memory, for example. After the decoders are sent into the field, an attacker might find a way to access these five areas of memory and remove the information. Since this information allows creation of the original seedload message, such an attack would allow a "pirate" to manufacture unauthorized clone decoder units. This is a significant problem since it results in loss of revenue to the network operator and others.

Instead of using seeds in the seedload message, pre-seeds may be used. The pre-seedload message may have the following form:

$$\text{Unit Address + Pre-seed-1 + Pre-seed-2 +}$$
$$\text{Pre-seed-3 + Pre-seed-4}$$

When the pre-seedload message is received at a decoder, the pre-seeds are processed using a OWF to create the seeds:

Unit Address [stored] = Unit Address [received]
Seed-1 [stored] = OWF( Pre-seed-1[received] )
Seed-2 [stored] = OWF( Pre-seed-2[received] )
Seed-3 [stored] = OWF( Pre-seed-3[received] )
Seed-4 [stored] = OWF(Pre-seed-4[received] )

This method provides greater security since it is now computationally infeasible for an attacker to calculate a pre-seed from a seed extracted from security component memory. To calculate pre-seed-1 from seed-1, for example, the attacker would have to compute:

$$\text{Pre-seed-1} = \text{OWF}^{-1}( \text{Seed-1} )$$

However, as long as the OWF chosen was adequately strong, this was an untenable problem. In particular, DES-based OWFs are well-studied and thought quite reliable. This OWF approach solves the Information Delivery and Reuse Problem for delivery of DES keys.

Note that, when using this OWF technique, it is fundamentally assumed that passing a valid DES key through the OWF will form an output that is also a valid DES key. Were this not true, then Seeds would not be valid DES keys, making them useless.

DES keys are easily generated using any adequate source of random bits and a trivial procedure:

Step 1. Generate 56 random bits.
Step 2. Use all 56 as a valid DES key.

The term "random" is used herein to encompass "pseudo-random". It is understood that a purely random process is difficult to achieve in practice.

RSA keys are generated differently, using the following complex numerical procedure:

Step 1. Choose a (big) modulus size, e.g., 1024 bits.
Step 2. Probabilistically generate a 512 bit prime number P as follows:

    a) Generate 512 random bits.
    b) Assemble these bits into the number P.
    c) Test if P is a prime number.
    d) If prime, retain P and go to Step 3.
    e) If not prime, go back to Step 2a.

Step 3. Repeat Step 2 for another 512 bit prime Q.
Step 4. Form the 1024 bit modulus N = P.Q.
Step 5. Form the Euler Totient, $\varphi$ (PHI) = (P-1)-(Q-1).
Step 6. Randomly generate key K1, where K1 must be relatively prime to (P-1)·(Q-1).

    a) Generate 1024 random bits.
    b) Assemble these bits into the number K1.
    c) Test if K1 is relatively prime to (P-1)·(Q-1).
    d) If relatively prime, go to Step 7. If not, go back to Step 6a.

Step 7. Derive Key K2 from Key K1 and (P-1)·(Q-1) using Euclid's Extended Algorithm.
Step 8. Discard P, Q, and (P-1)·(Q-1) (important).
Step 9. Retain the following to use in RSA encryption:

    a) K1
    b) K2
    c) The modulus N = P·Q

Steps 2 and 3 are the problematic differences with DES key generation with regard to this invention. The random generation of numbers that meet a mathematically constrained condition, such as primicity, is a probabilistic process, with many numbers generated that are not prime. This is because prime numbers are relatively rare, as discussed previously with regard to FIG. 1, and because there is no known way to directly generate a prime number. Instead, random numbers are generated and tested to see if they are prime. When a prime number is found, the search can stop.

However, there is a problem with RSA public key generation, as the following discussion reveals. The "entropy" of a key can be defined as the number of valid keys for a key size of N bits. A maximally "entropic" key of N bits has $2^N$ valid keys. A key that is constrained in any way is less entropic, with tighter constraints reducing entropy accordingly. A fixed key is degeneratively entropic (i.e., has "zero entropy") since it only has a single value. DES keys, RSA moduli, RSA Keys K1, and RSA Keys K2 can all be ranked in terms of entropy, from least entropic to most entropic as follows: RSA Key K2, RSA Moduli, RSA Key K1, and DES Keys.

These entropy rankings come from the following considerations:

• DES keys are maximally entropic, in that a DES key of size N bits has 2" valid keys. Any N bit number is a valid key.

• RSA Key K1 is of medium-high entropy, since it is chosen randomly, but is constrained (loosely) to be relatively prime to (P-1) · (Q-1). It is reasonably likely that a randomly chosen value is relatively prime to a like-sized (P-1)·(Q-1), so relatively few values would be invalid.

• An RSA modulus has medium-low entropy, since it is generated as a prime number. Primes are unusual among the field of numbers, and their generation is improbable, as shown in FIG. 1. Many attempts are needed to create a single valid RSA modulus.

• RSA Key K2 has zero entropy, since the one valid value of K2 is directly derived from Key K1 and modulus N, rather than randomly generated. Key K2 therefore has degenerative entropy.

For a traditional DES keys of 56 bits, we need only generate 56 random bits to have a good key. This is because all $2^{56}$ possible values of a 56 bit key are legal DES keys with equivalent security. However, with public key algorithms based on number theoretic principles, this is not the case. If one generates a candidate RSA modulus of N bits, most of the time it is not even a valid modulus and must be discarded. An RSA public key modulus must be the product of two large prime numbers, for example, so each time a candidate key is assembled from randomly generated bits, further testing is needed to know if it is really a valid key.

In RSA, this is tested to determine whether the assembled bits constitute a prime number. In other algorithms, there are other tests besides prime testing, and these can be extraordinarily complex. The present invention provides a system that performs the OWF operation during the initial random bit generation phase, before further validity tests such as primality are applied. Then, if a valid number is found (e.g., a prime number) the input to a OWF that outputs that valid number has already been captured.

For example, if we were making an eight-bit key for a "mini-DES", there are 256 legal keys of size 8 bits (i.e., $2^8=256$).. If we were making an eight-bit RSA modulus N=P*Q with a P and Q of four bits each, we are constrained by there only being five acceptable four-bit prime numbers (i.e., 3, 5, 7, 11, 13) yielding 5*5 = 25 possible RSA moduli N of 8 bits. The odds of randomly generating one of these four-bit numbers is only 5/16, so a OWF would probably not generate one. If some undetermined algorithm XYZ had keys constrained in some way besides being prime (e.g., "all keys must be divisible by 13"), we would have a similar situation differing only in the type of mathematical constraint.

Moreover, there are 19 eight-bit numbers that are divisible by 13, i.e., 13, 26, 39, 52, 65, 78, 91, 104, 117, 130, 143, 156, 169, 182, 195, 208, 221, 234 and 247. Accordingly, randomly generating an eight-bit number has only a 19/256 chance of being a valid key for such a constrained-key system. This is simply another constraint besides primality, with similar techniques being just as relevant. Accordingly, the present invention is meant to encompass all such mathematically constrained systems, not just RSA.

A OWF creates an output that is best modeled as a random number. The challenge that is solved by the present invention is to use such a OWF output as a key when the type of key desired is not maximally entropic.

It is likely that a given OWF function output will not be a valid RSA Key or modulus, which prohibits the use of a OWF if only one output is available. Even if multiple outputs are available through repeated trials, the procedure must allow the time to perform such trials to obtain valid output.

Since any number, e.g., of length 56 bits, is a valid DES key, DES is well-disposed for accepting the output of a OWF. It does not matter whether that number came directly from a random source of bits, or from the output of a OWF; both will work. DES key generation is efficient and flexibly applicable for this reason, since random bits are easy to make at fairly high rates.

In contrast, RSA Key K2 is utterly ill-disposed to be the output of a OWF, since it is vanishingly unlikely for the lone valid value of K2 to be generated by a randomly-modeled process.

RSA Key K1 is less disposed to accept the output of a OWF, according to its lower entropy. But, if multiple outputs from multiple trials were available, obtaining a valid K1 might be feasible. An application with only one OWF output (such as seedloading) cannot work with RSA Key K1.

But, used as an RSA modulus, a given random number or OWF output has only a very small probability of being valid, as seen from FIG. 1. The RSA modulus is part of key generation and is created first, so RSA key generation is slow and inefficient. And worse, even if a valid modulus is found, it is very probable that it cannot be passed through a OWF without becoming an invalid modulus.

Neither is it possible to take a valid RSA modulus and work backwards through a OWF to derive the input that would calculate it. That means working backwards through a one-way function, which is computationally infeasible, by definition. Direct use of a OWF output as an RSA modulus is completely unworkable. A conventional OWF seedload message approach therefore cannot be used, leaving us with the Information Delivery and Reuse Problem.

Obtaining a valid RSA modulus at the output of a OWF is a problem this invention solves.

Hereafter, the term "RSA key generation" or "key generation" shall include both the RSA modulus and RSA key K1 and K2 generation process, and the OWF described is assumed to have a 64 bit input and output. Fewer or more bits may be used. Additionally, check bits may be used for error correction.

RSA keys and moduli can be generated using a OWF as follows. Conventionally, random key generation is a separate process from how the valid keys generated are used. This works because DES keys are easy to generate and are valid even if subsequently passed through a OWF. But, separating key generation from seedload message creation is not possible when traditionally-generated RSA keys are used.

In accordance with the present invention, the seedload message OWF is merged into the RSA key and modulus generation process itself. This is done in three specific places in the process, resulting in the below modified RSA key and modulus generation procedure:

Step 1. Choose a (big) modulus size, like 1024 bits.
Step 2. Probabilistically generate a 512 bit prime number P as follows:

    a) Generate 512 (= 8·64) random bits.
    b) Assemble each 64 bits into eight pieces or segments called $Pre\text{-}P_1...Pre\text{-}P_8$.
    c) Pass $Pre\text{-}P_1...Pre\text{-}P_8$ through a OWF to form $P_1... P_8$, respectively.
    d) Assemble $P_1... P_8$ back into the 512 bit number P.
    e) Test if P is a prime number.
    f) If P is prime, retain P and $Pre\text{-}P_1$. $Pre\text{-}P_8$ and go to Step 3.
    g) If P is not prime, discard $Pre\text{-}P_1...Pre\text{-}P_8$ and go back to Step 2a.

Step 3. Repeat Step 2 for prime Q, forming $Pre\text{-}Q_1 ... Pre\text{-}Q_8$ in the process.
Step 4. Form the 1024 bit modulus N = P.Q.
Step 5. Form the Euler Totient = (P-I).(Q-I).
Step 6. Randomly generate key K1, where K1 must be relatively prime to (P-I)-(Q-I):

    a) Generate 1024 random bits.
    b) Assemble each 64 bits into 16 numbers $Pre\text{-}K1_1...Pre\text{-}K1_{16}$
    c) Pass $Pre\text{-}K1_1...Pre\text{-}K1_{16}$ through a OWF to form $K1_1...K1_{16}$, respectively.
    d) Assemble $K1_1...K1_{16}$ into the 1024 bit number K1.
    e) Test if K1 is relatively prime to $(P-1)\cdot(Q-1)$.
    f) If relatively prime, go to Step 7. If not, go back to Step 6a.

Step 7. Derive Key K2 from Key K1 and (P-1)-(Q-1) via Euclid's Extended Algorithm.
Step 8. Discard P, Q, and $(P-1)\cdot(Q-1)$ (important).
Step 9. Retain the following to use in OWF message delivery & RSA encryption:

    a) $Pre\text{-}K1_1 ... Pre\text{-}K1_{16}$
    b) K2
    c) $Pre\text{-}P_1 ... Pre\text{-}P_8$
    d) $Pre\text{-}Q_1 ... Pre\text{-}Q_8$.

The above procedure of the present invention allows the generation of valid RSA keys that are the output of a OWF. The OWF is now integrated into the key generation process itself, e.g., in the creation of P, Q, and K1.

The OWF RSA key generation procedure can be used to solve the Information Delivery and Reuse Problem as follows. The objective is to deliver the modulus N and key K1 to the receiver/decoder. Key K2 is not needed by the receiver since it will be used for message encryption only at the headend. Key K1 is used for message decryption only at a decoder.

Step 1. Generate RSA key variables $Pre\text{-}K1_1... Pre\text{-}K1_{16}$, $Pre\text{-}P_1 ... Pre\text{-}P_8$, $Pre\text{-}Q_1... Pre\text{-}Q_8$, and K2 using the OWF procedure above. The OWF may have a 64 bit input and output.

Step 2. Form an RSA pre-seedload message of the following form:

```
Unit Address + Pre-P₁...Pre-P₈ + Pre-Q₁...Pre-Q₈ +
Pre-K1₁...Pre-K1₁₆
```

Step 3. Send the RSA pre-seedload message to the message receiver (e.g., decoder).

Now the message receiver (e.g., decoder) does all the processing. Note that the decoder must have the OWF used in key generation above. The OWF can be provided to decoders in a decoder population using various techniques. For example, the OWF may be installed in non-volatile memory at the time the decoder is manufactured, using a smart card or the like, or downloaded via the communication network. The OWF may itself be encrypted to prevent interception and compromise.

The decoder performs the following steps to derive K1 and N for use in decrypting the encrypted video, audio or other data:

Step 1. Process $Pre\text{-}P_1 ... Pre\text{-}P_8$ :

a) Pass Pre-$P_1$...Pre-$P_8$ through the OWF to form $P_1$ ... $P_8$..
b) Discard Pre-$P_1$...Pre-$P_8$ (important).
c) Reassemble $P_1$...$P_8$ to form P.

Step 2. Process Pre-$Q_1$ ... Pre-$Q_8$ :

a) Pass Pre-$Q_1$...pre-$Q_8$ through the OWF to form $Q_1$ ... $Q_8$ .
b) Discard Pre-$Q_1$ ...Pre-$Q_8$ (important).
c) Reassemble $Q_1$ ... $Q_8$ to form Q.

Step 3. Process P and Q:

a) Multiply P and Q to form the Modulus N.
b) Discard P and Q (important).

Step 4. Process Pre-$K1_1$... Pre-$K1_{16}$:

a) Pass Pre-$K_1$,...Pre-$K1_{16}$, through the OWF to form $K1_1$...$K1_{16}$, respectively
b) Discard Pre-$K1_1$ ... Pre-$K1_{16}$ (important).
c) Reassemble $K1_1$... $K1_{16}$ to form K1.

At this point, the message receiver/decoder has the desired information, having derived it by passing RSA seedload message information through a OWF. If an attacker somehow extracts the modulus N and Key K1, he cannot form a valid RSA pre-seedload message since, first, P and Q cannot be formed without factoring the modulus N. This is the "hard problem" that the security of RSA is based upon. Second, even given P, Q or K1, Pre-$P_1$ ... Pre-$P_8$, Pre-$Q_1$... pre-$Q_8$, and Pre-$K1_1$...Pre-$K1_{16}$ cannot be derived due to the use of the OWF.

The invention is illustrated in the following figures.

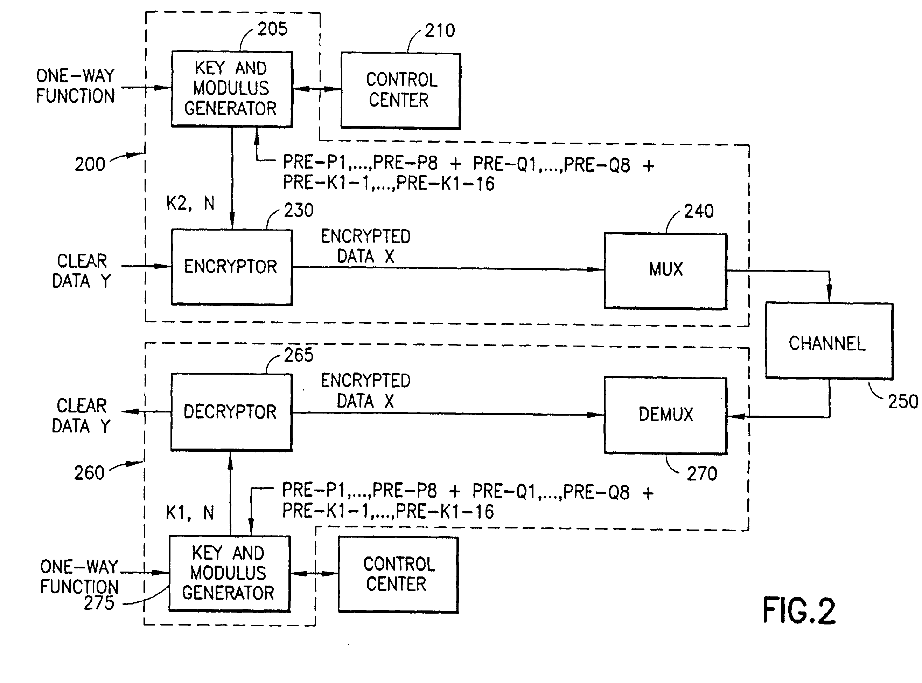

FIG. 2 illustrates a broadband communication network with an encoder and decoder in accordance with the present invention. An encoder is shown generally at 200, while a decoder is shown generally at 260. The encoder 200 may be provided at the headend of a cable television or satellite distribution network, while the decoder 260 represents one decoder in a decoder population, e.g., at a consumer's home. The encoder 200 includes a key and modulus generator 205, and, optionally, multiplexer (MUX) 240.

The key and modulus generator 205 uses a one-way function to generate a number of pre-seed segments, Pre-$P_1$ through Pre-$P_8$, Pre-$Q_1$ through Pre-$Q_8$, and Pre-$K_1$-1 through Pre-$K_1$-16. Optionally, different one-way functions can be used for the different sets of segments. For example, a first one-way function can be used with Pre-$P_1$ through Pre-$P_8$, (Pre-P), a second one-way function can be used with Pre-$Q_1$ through Pre-$Q_8$, (Pre-Q), and a third one-way function can be used with Pre-$K_1$-1 through Pre-$K_1$-16 (Pre-K). It is also possible to use different one-way functions for each segment within a set.

The key and modulus generator 205 uses the pre-seed data to generate the RSA key K2, and the RSA modulus N. The encryptor 230 uses K2 and N to encrypt clear data Y, thereby providing corresponding encrypted data X. The encryptor 230 implements the RSA public key crypto system according to $X=Y^{K2}$ (mod N). As mentioned, the clear data Y may comprise video, audio or other data.

Note that unencrypted data may be communicated with the encrypted data to the decoder 260 and other decoders in the network. For example, a tiered distribution service may be offered wherein all decoders are authorized to receive a basic level of programming, while only specific decoders are authorized to receive one or more levels of premium programming upon payment of additional fees. In this case, only the premium programs need be encrypted.

A control center 210, which may optionally be part of the encoder 200, can control the processing of the key and modulus generator 205. The control center 210 may optionally provide an accounting capability, e.g., by maintaining records regarding which decoders are authorized to receive the encrypted data. For example, the control center 210 may keep track of payments, billing and other relevant information.

The same pre-seed data at the key and modulus generator 205 is provided at the decoder 260, e.g., via a chip. This step generally only occurs in the manufacturing process for the decoder 260. The encrypted data X is provided to the MUX 240 for communication across a channel 250 to the decoder 260. For example, the channel 250 may comprise a cable television distribution network or a satellite distribution network that communicates with a decoder population. Other data, such as encrypted or unencrypted program and/or control data may be multiplexed with the encrypted data X at MUX 240.

At the decoder 260, the transmitted data is received from the channel 250 at the demultiplexer (DEMUX) 270. The DEMUX 270 provides the encrypted data X to a decryptor 265. Other data received at the DEMUX 270 is routed as required. The pre-seed data is processed at the key and modulus generator 275, e.g., via a chip at the decoder that stores a pre-seedload message, where the pre-seed data is processed with the same one-way function used at the encoder 200 to derive the cryptographic key K1 and the modulus N. K1 and N are provided to the decryptor 265 for use in decrypting the encrypted data X to recover the clear data Y.

A control center 282 is optionally provided at the decoder 260 for controlling the processing at the key and modulus generator 275.

The clear data Y may be further processed using conventional circuitry as required. For example, if the clear data Y comprises video data, it may be necessary to perform conventional video decompression processing. Details regarding this processing are within the purview of those skilled in the art.

Note also that, while a single decoder 260 is shown in FIG. 2, typically there will be thousands of decoders in a decoder population that receive data from a single headend encoder, such as encoder 200.

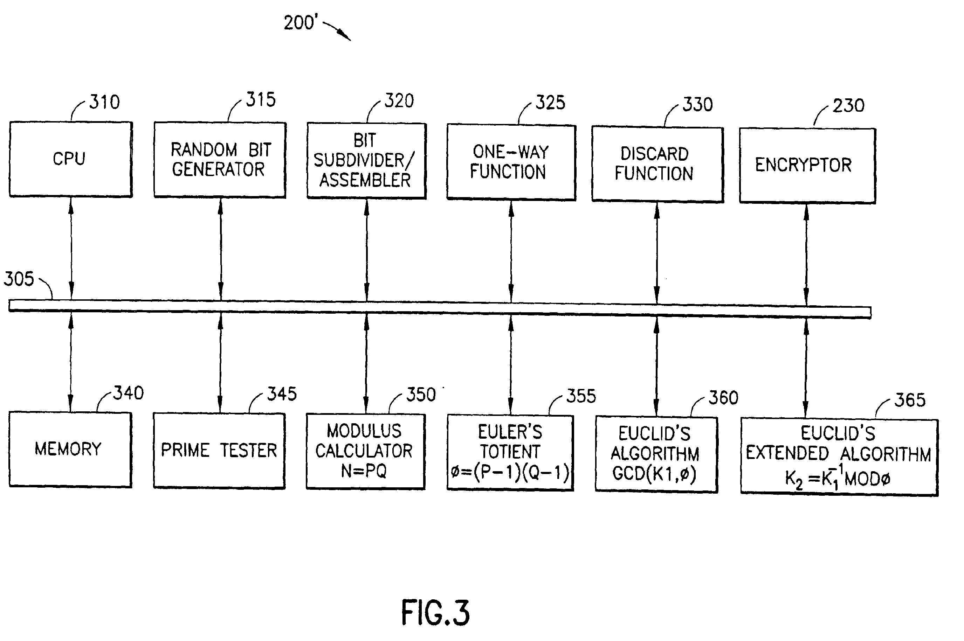

FIG. 3 illustrates an encoder in accordance with the present invention. The encoder 200' includes a number of different processes which are shown individually. However, it should be appreciated that the different processes may be implemented using shared circuitry, including a common microprocessor and memory storage elements, and/or other software, firmware and/or hardware. Furthermore, these processes may generally be considered part of the key and modulus generator 205 and encryptor 230 of FIG. 2.

The encoder 200' includes a central processing unit (CPU) 310 that communicates with a bus 305. A random bit generator 315 generates random bit strings using any known random data generating technique. For example, 512 bit and 1024-bit bit strings may be generated. A bit subdivider/assembler 320 may subdivide the random bit string into a number of segments. For example, eight equal segments may be used.

Generally, it is desirable for each segment to have a length, such as 64 bits or more, that provides the necessary degree of security when a one-way function is used to process each segment. If the segment is too short, the level of security may be insufficient even when a one-way function is used to process the segment. However, as the length of each segment increases, the probability that a randomly generated bit string or any subset thereof will be prime or meet another desired mathematical constraint decreases, thereby increasing computing time. Accordingly, there is a trade-off between security and computing time.

A one-way function 325 individually processes each of the bit segments from the bit subdivider/assembler 320. Any known one-way function may be used. For example, each segment may be encrypted using one or more DES keys and a feedforward hash. The segments that are processed by the one-way function 325 are then assembled into a single bit string at the bit subdivider/assembler 320. For example, when eight 64-bit segments are used, the segments may be concatenated or otherwise assembled to obtain a new 512 bit length bit string.

Optionally, random re-ordering of the segments may occur before and/or after processing by the one-way function to provide further security. Corresponding re-ordering must be used at the decoder.

The newly assembled bit string may be provided to a prime tester 345, which may implement any known prime testing technique to determine whether the processed bit string is a prime number. Moreover, even if primicity cannot be determined to a complete certainty, it is possible to achieve a desired level of confidence that the bit string is prime, e.g., 99.9999% confidence.

For example, one prime testing technique uses an algorithm called "WITNESS", discussed in Miller, G., "Reimann's Hypothesis and Tests for Primality," Proceedings of the Seventh Annual ACM Symposium on the Theory of Computing, May 1975, and Rabin, M., "Probabilistic Algorithms for Primality Testing," Journal of Number Theory, December 1980. The algorithm receives an input "n", the number to be tested for primeness, and some integer "a", where $a<n$, as set forth in the following pseudo-code:

```
        WITNESS(a,n)
        1.  let bₖbₖ₋₁. . . b₀ be the binary representation
    of (n-1).
        2.  d ← 1
```

```
3.    for i ← k downto 0
4.        do x ← d
5.        d ← (d × d) mod n
6.        if d = 1 and x ≠ 1 and x ≠ n - 1
7.           then return TRUE
8.           if b_i = 1
9.              then d ← (d × a) mod n
10.   if d ≠ 1
11.   then return TRUE
12.   return FALSE
```

If TRUE is returned, then "n" is definitely not prime. If FALSE is returned, then "n" may be prime.

Moreover, as discussed in Cormen, T., Leiserson, C. and Rivest, R., Introduction to Algorithms, Cambridge, Mass., MIT Press, 1990, WITNESS may be invoked repeatedly using randomly chosen values for "a". If at any point, TRUE is returned, "n" is not prime. If FALSE is returned "s" times in succession, then the probability that "n" is prime is at least $1-2^{-s}$. Thus, for a sufficiently large value of "s", a corresponding confidence level that that "n" is prime can be established.

Specifically, two 512-bit bit strings, P and Q, may be tested by the prime tester 345. Once the bit strings P and Q have been found to be sufficiently prime, they are provided to a modulus calculator 350 to form the RSA modulus $N=P \cdot Q$.

Note that any function that tests for any mathematical constraint (not limited to primicity) may be used in accordance with the present invention.

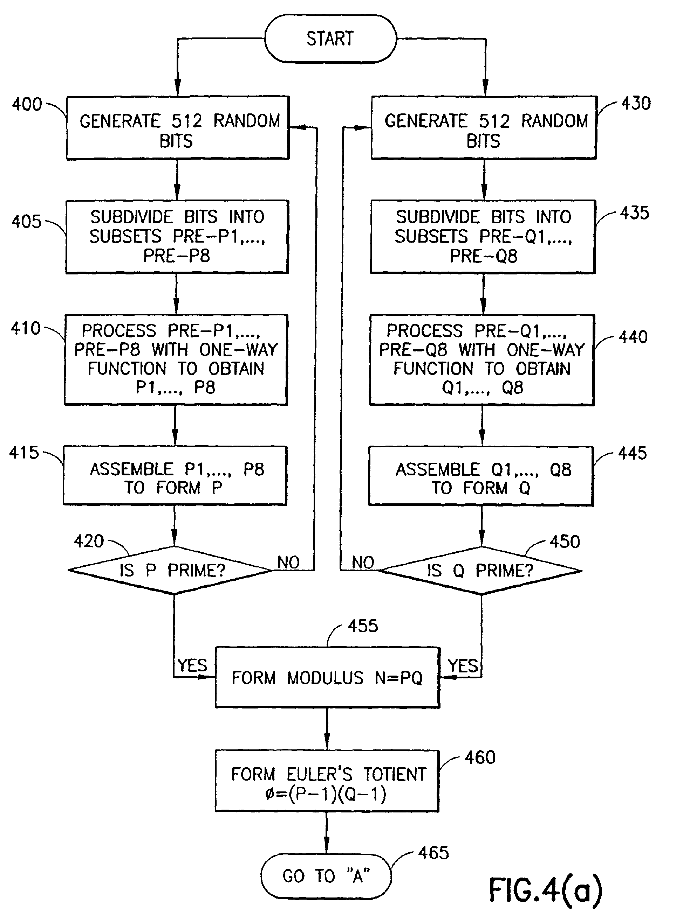

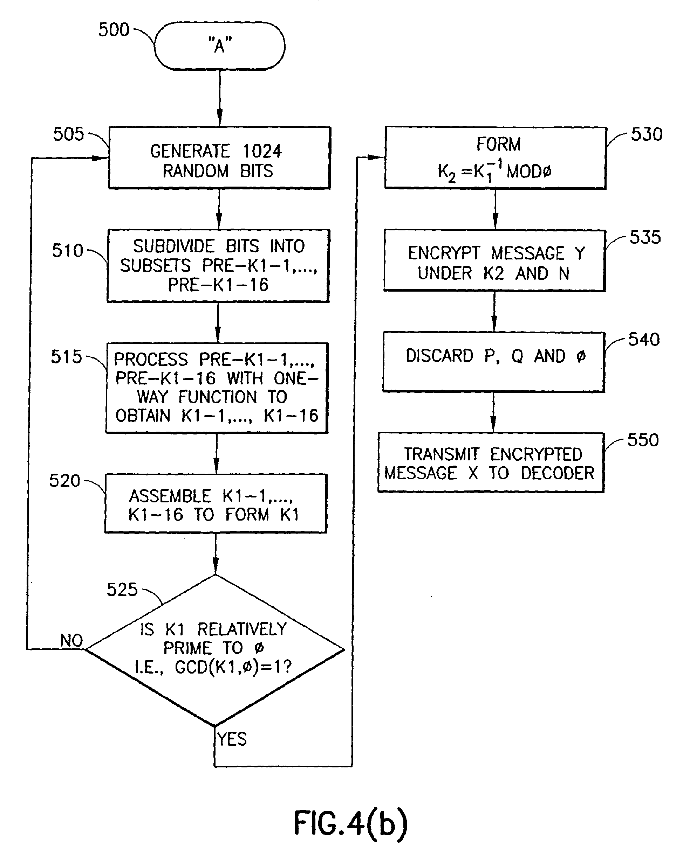

Additionally, an Euler's Totient function 355 is used to form the product ($\varphi=(P-1) \cdot (Q-1)$). Euler's Totient represents the number of positive integers less than N and relatively prime to N. Once $\varphi$ is determined, Euclid's (Basic) Algorithm is performed at function 360 to form the greatest common divisor (GCD) of K1 and $\varphi$, as explained further in connection with FIGs 4(a) and 4(b). A positive integer C is the GCD of two integers A and B if C is a divisor of A and B, and any divisor of A and B is a divisor of C.

Euclid's Extended Algorithm is performed at function 365 to obtain the key K2. K2 and N are used by an encryptor 230 to encrypt data $X=Y^{K2}$ (mod N). The CPU 310 and memory 340 may be used to control the other functions and provide intermediate and/or final storage of data as required. Additionally, the data to be encrypted at the encryptor 230 may be provided via the bus 305 or by other means.

FIG. 4(a) illustrates the first part of an encoding method in accordance with the present invention. At block 400, a random bit string, e.g., having a length of 512 bits, is generated. At block 405, the bits are assembled into a number of pre-seed subsets, Pre-$P_1$ through Pre-$P_8$. For example, eight subsets, each having a length of 64 bits may be used. At block 410, each of the subsets is processed with a one-way function to obtain corresponding subsets $P_1$ through $P_8$. Since a one-way function is used, it is essentially impossible to derive the pre-seed subsets Pre-$P_1$ through Pre-$P_8$ from the subsets $P_1$ through $P_8$, respectively. At block 415, the processed subsets $P_1$ through $P_8$ are assembled to form the 512 bit length bit string P. At block 420, P is tested to determine if it is prime to a sufficient degree of confidence. If not, the process is repeated at block 400, and the pre-seed data is discarded. If so, processing continues at block 455.

A corresponding bit string Q is derived at blocks 430, 435, 440, and 445, which correspond to blocks 400, 405, 410, and 415, respectively. Specifically, at block 430, another 512 bit random bit string is generated. At block 435, the bit string is assembled into subsets Pre-$Q_1$ through Pre-$Q_8$. At block 440, Pre-$Q_1$ through Pre-$Q_8$ are processed with a one-way function to obtain the corresponding processed subsets $Q_1$ through $Q_8$, respectively. At block 445, $Q_1$ through $Q_8$ are assembled to form the 512-bit bit string Q.

At block 450, corresponding to block 420, a determination is made as to whether Q is prime to a sufficient degree of confidence. If not, the process is repeated at block 430, and the pre-seed data is discarded. If so, processing continues at block 455.

Alternatively, testing for any desired mathematical constraint may be performed at blocks 420 and 450.

At block 455, the RSA modulus $N=P \cdot Q$ is formed, and at block 460, Euler's Totient $\varphi=(P-1)-(Q-1)$ is formed.

At block 465, processing continues at block A of FIG. 4(b). Note that the one-way functions used in blocks 410 and 440 may be the same; however, this is not required. Moreover, it is even possible to process each subset with a different one-way function, and/or to use two or more one-way functions to process a single subset or complete bit string. Other variations, including the use of additional, conventional encryption steps, will be apparent to those skilled in the art.

FIG. 4(b) illustrates the second part of the encoding method of FIG. 4(a) in accordance with the present invention. Processing continues at block 500. At block 505, a random bit string having a length, e.g., of 1024 bits, is generated. At block 510, the bit string is subdivided into sixteen pre-seed subsets Pre-$K_1$-1 through Pre-$K_1$-16, each having a length of 64 bits. At block 515, each 64-bit subset is processed with a one-way function to obtain corresponding processed subsets $K_1$-1 through $K_1$-16. The one-way function used at block 515 may the same as, or different than, the one-way functions used at blocks 410 and 440 of FIG. 4(a). At block 520, the processed subsets K1-1 through K1-16 are assembled to form the RSA key K1.

At block 525, a determination is made as to whether K1 is relatively prime to $\varphi$ ("PHI") with a sufficient degree of confidence. K1 is relatively prime to $\varphi$ when Euclid's Basic algorithm indicates that GCD(K1, $\varphi$)=1. If GCD(K1, $\varphi$)≠1, the processing is repeated beginning at block 505, and the pre-seed data is discarded. If GCD(K1,$\varphi$)=1, processing continues at block 530, where Euclid's Extended Algorithm is used to form the RSA key $K2=K_1^{-1} \bmod \varphi$.

At block 535, a message Y is encrypted under K2 and N to form the cipher text $X=Y^{K2} \cdot (\bmod\ N)$. At block 540, P, Q and $\varphi$ are discarded. This step is important since an attacker may be able to obtain this information if it is stored in memory. Finally, at block 550, the encrypted message X is transmitted to the decoder population.

Note that the pre-seed segments Pre-$P_1$ through Pre-$P_8$, Pre-$Q_1$ through Pre-$Q_8$, and Pre-$K_1$-1 through Pre-$K_1$-16 are also provided to the decoder population, e.g., via chips. This step generally occurs independently of the previous steps, which involve processing at an encoder.

Preferably, the pre-seed data for the three bit strings P, Q and K1 is provided to the decoders. However, it is possible to implement the invention by providing the pre-seed data for less than all three of the bit strings to the decoders. The security of the system is still improved since the burden placed on an attacker is increased.

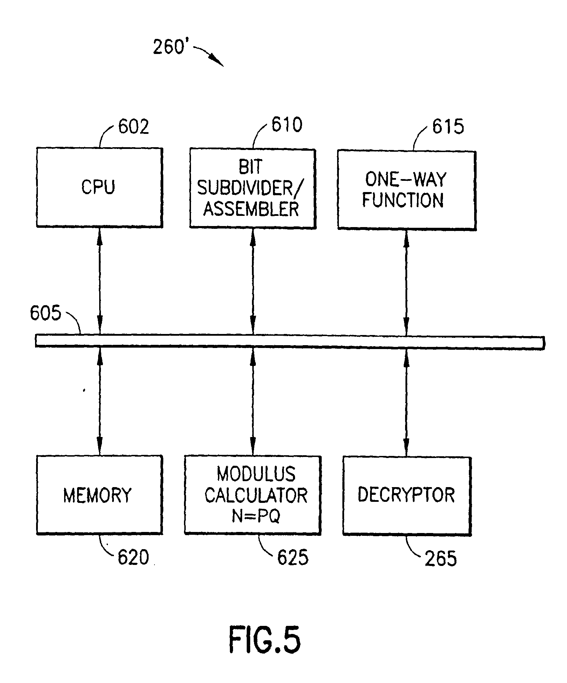

FIG. 5 illustrates a decoder in accordance with the present invention. The decoder 600 includes a CPU 602 that communicates with a bus 605. A bit subdivider/assembler 610, one-way function 615, memory 620, and modulus calculator 625, correspond generally to the liked-named elements of the encoder 200' of FIG. 3.

The pre-seed segments that are provided to the decoder 600, e.g., via a chip, are processed by the one-way function 615 to obtain the corresponding processed segments. Next, the bit subdivider/assembler 610 assembles the respective processed segments to form P, Q and K1. The RSA modulus N is calculated at function 625. At the decryptor 265, K1 and N are used to decrypt the received encrypted data X to recover the clear text $Y=X^{K1} (\bmod\ N)$.

The CPU 602 and memory 620 may be used to control the other decoder functions and provide intermediate and final data storage as required. Moreover, each of the decoder elements may be implemented in separate and/or shared components, including software, firmware and/or hardware.

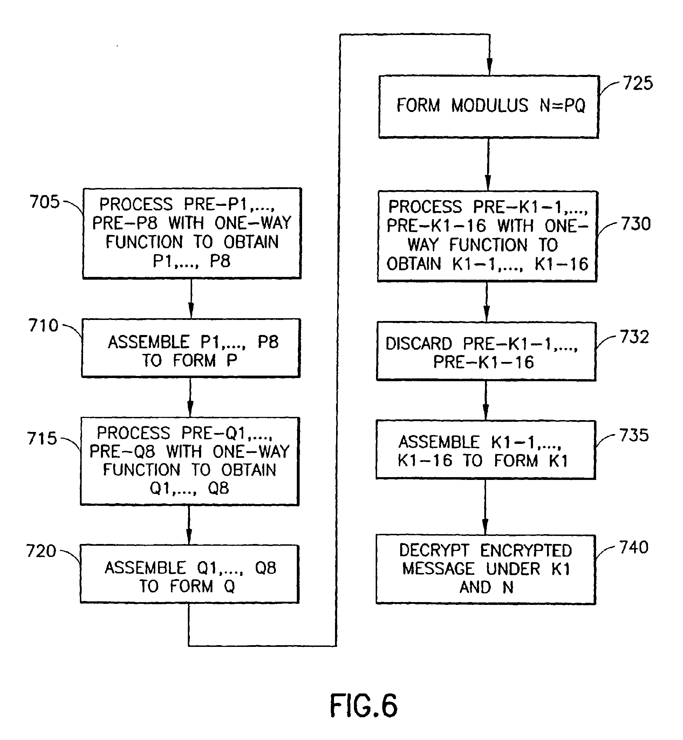

FIG. 6 illustrates a decoding method in accordance with the present invention. The respective pre-seed segments that were used at the encoder are also available at the decoder, e.g., from a chip, smart card or the like.

At block 705, the pre-seed segments Pre-$P_1$ through Pre-$P_8$ are processed with a one-way function to obtain the corresponding processed segments $P_1$ through $P_8$. This is the same one-way function used at block 410 of FIG. 4(a). At block 710, the processed segments $P_1$ through $P_8$ are assembled to form P. Similarly, at block 715, the pre-seed segments Pre-$Q_1$ through Pre-$Q_8$ are processed with a one-way function to obtain the processed segments $Q_1$ through $Q_8$, respectively. This is the same one-way function used at block 440 of FIG. 4(a). At block 720, the processed segments $Q_1$ through $Q_8$ are assembled to form Q. At block 725, the modulus N = P·Q is formed.

At block 730, the pre-seed segments Pre-$K_1$-1 through Pre-$K_1$-16 are processed with a one-way function to obtain the processed segments $K_1$-1 through $K_1$-16, respectively. This is the same one-way function used at block 515 of FIG. 4(b). At block 732, Pre-$K_1$-1 through Pre-$K_1$-16 are discarded. At block 735, the processed segments $K_1$-1 through $K_1$-16 are assembled to form the RSA key K1. Finally, at block 740, the encrypted data X is decrypted under K1 and N to obtain $Y=X^{K1} (\bmod\ N)$.

As mentioned, it is possible to use different one-way functions at the encoder in processing the different segments and/or complete bit strings. Accordingly, the same corresponding one-way function or functions should be used at the decoder to obtain the original segments and bit strings. Additionally, it is possible to use more than one one-way function serially in processing a given bit string. Moreover, other known encryption techniques may be used in conjunction with the present invention.

Accordingly, it can be seen that the present invention provides a method and apparatus for generating a mathematically constrained key, such as an RSA cryptographic key and modulus using a one-way function and testing for the mathematically constrained condition, such as primicity. In one embodiment, the 5 invention achieves the security benefits of both the RSA system and one or more one-way functions. The invention is particularly suitable for use with access-controlled broadband communication networks in which pre-seed data is provided to specific decoders on the network.

In an illustrated embodiment, pre-seed data is processed at an encoder, such as a headend, using a one-way function and tested to determine if it is prime. If so, two prime numbers P and Q are thusly obtained and used to form an RSA modulus N and cryptographic key K2. Data Y, such as video, audio or other data in a cable or satellite television network, is encrypted to obtain the encrypted data $X=Y^{K2}$ (mod N), and transmitted over the network to a decoder population.

During the manufacturing process or at the time of installation, decoders receive the pre-seed data, e.g., via local chips, which is processed at the decoders using the same one-way function used during the key generation processto obtain the modulus N and the RSA key K1. K1 is derived from K2 using Euclid's Extended Algorithm.

The encrypted data X is decrypted to recover the clear data $Y=X^{K1}$ (mod N). Preferably, the pre-seed data is obtained by subdividing a random bit string into several segments, then independently processing each segment with the one-way function to obtain corresponding processed segments. The processed segments are assembled to obtain a processed bit string which is tested for primicity. The bit string is used if it is found to be prime to a sufficient confidence level. Otherwise, successive iterations are performed until an acceptable bit string is obtained. Moreover, the bit string segments are selected to be long enough to provide adequate security, yet short enough to avoid excessive computing time due to multiple iterations to obtain a prime bit string.

Although the invention has been described in connection with various specific embodiments, those skilled in the art will appreciate that numerous adaptations and modifications may be made thereto without departing from the spirit and scope of the invention as set forth in the claims.

For example, while the invention was discussed in connection with a cable or satellite television broadband communication networks, it will be appreciated that other networks such as local area networks (LANs), metropolitan area networks (MANs), wide area networks (WANs), internets, intranets, and the Internet may be used.

Moreover, it should be appreciated that the bit string lengths and number of segments per bit string used in the illustrations are examples only. Generally, the only requirement in this regard is that the minimum bit string length for a segment that is processed by a one-way function is sufficiently large, e.g., 56 or 64 bits, to maintain a high level of security.

Furthermore, processing of multiple bit string segments, e.g., with the one-way functions, may be implemented at the key generator during manufacture and/or at the decoder either serially, or concurrently in a parallel processing scheme.

Additionally, although preferably each of P, Q and K1 are processed with one-way functions, this is not required. For example, security benefits will still be achieved if only one or more of P, Q and K1 are processed with one or more one-way functions.

Moreover while processing was discussed in terms of generating bit strings and bits, it is understood that the values generated can be expressed in any numerical base including, e.g., decimal and hexadecimal.

**Claims**

**1.** A method for generating a cryptographic key, K2, comprising the steps of:

(a) generating a first set of values;
(b) processing at least a portion of said first set of values with a first one-way function to obtain a corresponding value P;
(c) testing the value P for satisfaction of a mathematical constraint;
(d) if the value P does satisfy said mathematical constraint in said step (c), forming said cryptographic key K2 as a function of the value P; and
(e) if the value P does not satisfy said mathematical constraint in said step (c), repeating said steps (a), (b) and (c) as necessary to obtain a value P that satisfies said mathematical constraint in said step (c), and forming said cryptographic key K2 as a function of the value P.

**2.** The method of claim 1, wherein:

at least one of the first set of values is randomly generated.

**3.** The method of claim 1 or 2, wherein:

the key K2 is a Rivest, Shamir, and Adleman (RSA) key.

**4.** The method of one of claims 1 to 3, wherein:

said mathematical constraint is associated with an Elliptic Curve Cryptosystem.

5.  The method of one of claims 1 to 4, comprising the further steps of:

(f) encrypting a message Y to form an encrypted message X as a function of the key K2;
(g) transmitting said encrypted message X to a decoder in a decoder population via a broadband communication network; and
(h) providing the decoder with data for use in decrypting said encrypted message X.

6.  The method of one of claims 1 to 5, wherein:

said step (b) comprises the step of processing at least a portion of the first set of values with said first one-way function to obtain a corresponding first set of processed values.

7.  The method of claim 6, wherein said step (b) comprises the further step of:

assembling said first set of processed values to form said value P.

8.  The method of one of claims 1 to 7, wherein:

said mathematical constraint is primicity at a desired primicity confidence level.

9.  The method of claim 8, comprising the further steps of:

(f) generating a second value Q from a second set of values;
(g) forming $\varphi=(P-1)\cdot(Q-1)$;
(h) generating a third set of values;
(i) processing at least a portion of said third set of values with a one-way function thereof to obtain a corresponding value K1;
(j) testing the value K1 for relative primicity to $\varphi$; and
(k) if the value K1 is not found to be relatively prime to $\varphi$ in said step (j), repeating said steps (h), (i) and (j) as necessary to obtain a value K1 that is relatively prime to $\varphi$.

10. The method of claim 9, wherein:

said step (i) comprises the step of processing at least a portion of the third set of values with said one-way function thereof.

11. The method of claim 9 or 10, wherein:

said step (j) determines that the value K1 is relatively prime to $\varphi$ when a greatest common divisor of the value K1 and $\varphi$ is one.

12. The method of one of claims 9 to 11, wherein:

at least a portion of the second set of values is randomly generated.

13. The method of one of claims 9 to 12, wherein:

the second value Q is generated in said step (f) by processing at least a portion of the second set of values with a one-way function thereof.

14. The method of one of claims 9 to 13, wherein:

at least a portion of the third set of values is randomly generated.

15. The method of one of claims 9 to 14, comprising the further steps of:

(l) forming a modulus N=PxQ; and

(m) forming an encrypted message X by encrypting a message Y as a function of the key K2 and the modulus N.

16. The method of claim 15, wherein:

said step (m) comprises the step of encrypting said message Y to form the encrypted message $X=Y^{K2}(\text{mod } N)$.

17. A method for decoding an encrypted message X at a decoder, comprising the steps of:

(a) processing at least a portion of a first set of values with a first one-way function to obtain a corresponding first set of processed values;
(b) forming a value P from said first set of processed values;
(c) generating a cryptographic key K1 from a second set of values; and
(d) decrypting the encrypted message X as a function of said cryptographic key K1 and said value P; wherein:

(i) said encrypted message X is encrypted at an encoder as a function of a cryptographic key K2, (ii the key K2 is generated at the encoder in accordance with the method of claim 1 from values including a third set of values, and (iii) at least a portion of the third set of values is processed with a first one-way function thereof corresponding to said first one-way function of said step (a) to obtain a corresponding third set of processed values which satisfy a mathematical constraint.

18. The method of claim 17, wherein:

at least one of the second set of values is randomly generated.

19. The method of claim 17 or 18, wherein:

the key K1 is a Rivest, Shamir, and Adleman (RSA) key.

20. The method of one of claims 17 to 19, wherein:

said mathematical constraint is associated with an Elliptic Curve Cryptosystem.

21. The method of one of claims 17 to 20, wherein:

said encrypted message X is transmitted from the encoder to a decoder population including said decoder via a broadband communication network.

22. The method of one of claims 17 to 21, wherein:

at least one of the first set of values is randomly generated.

23. The method of one of claims 17 to 22, wherein:

at least one of the third set of values is randomly generated.

24. The method of one of claims 17 to 23, wherein:

said mathematical constraint is primicity at a desired primicity confidence level.

25. The method of one of claims 17 to 24, wherein said step (b) comprises the further step of:

assembling said first set of processed values to form said value P.

26. The method of one of claims 17 to 25, wherein:

said step (c) comprises the step of processing at least a portion of said second set of values with a one-way function thereof to obtain a corresponding second set of processed values.

**27.** The method of claim 26, wherein said step (d) comprises the step of:

assembling said second set of processed values to form the key K1.

**28.** The method of one of claims 17 to 27, comprising the further steps of:

(d) providing a fourth set of values;
(e) processing at least a portion of said fourth set of values with a one-way function thereof to obtain a corresponding value Q; and
(f) forming a modulus $N = P \times Q$ for use in decrypting the encrypted message X.

**29.** The method of claim 28, wherein:

the fourth set of values are the same as the third set of values.

**30.** The method of claim 28 or 29, wherein:

K2 and K1 are related by $K2 = K_1 - 1 \bmod \varphi$, where $\varphi = (P-1) \times (Q-1)$.

**31.** The method of one of claims 28 to 30, wherein

at least a portion of the fourth set of values is randomly generated.

**32.** The method of one of claims 28 to 31, wherein said encrypted message X is formed from a message Y at the encoder according to: $X = Y^{K2} \pmod N$, comprising the further step of:

(g) decrypting the encrypted message X using said cryptographic key K1 and said modulus N to obtain said message Y according to: $X^{K1} \pmod N$.

**33.** An encoder for generating a cryptographic key, K2, comprising:

means (315, 320) for generating a first set of values;
means (325) for processing at least a portion of said first set of values with a first one-way function to obtain a corresponding value P;
means (345) for testing the value P for satisfaction of a mathematical constraint; and
means (365) for forming said cryptographic key K2 as a function of the value P if the value P does satisfy said mathematical constraint;
wherein if the value P does not satisfy said mathematical constraint, said generating means (315, 320) generates a new first set of values, said processing means (325) processes the new first set of values, and said testing means (345) tests the new value P for satisfaction of the mathematical constraint until the value P satisfies said mathematical constraint, and said forming means (365) is adapted to form said cryptographic key K2 as a function of the value P.

**34.** A decoder for decoding an encrypted message X, comprising:

means for generating a first set of values;
means (615) for processing at least a portion of said first set of values with a first one-way function to obtain a corresponding first set of processed values;
means (610) for forming a value P from said first set of processed values;
means (610) for generating a cryptographic key K1 from a second set of values; and
means (265) for decrypting the encrypted message X as a function of said cryptographic key K1 and said value P; wherein:

(i) said encrypted message X is encrypted at an encoder (200) as a function of a cryptographic key K2, (ii) the key K2 is generated at the encoder (200) in accordance with the method of claim 1 from a set of values thereof, and (iii) at least a portion of the set of values of the key K2 are processed with a first one-way function thereof corresponding to said first one-way function of said step (b) to obtain corresponding set of processed values which satisfy a mathematical constraint.

**Patentansprüche**

1.  Ein Verfahren zum Erzeugen eines kryptographischen Schlüssels K2, das die folgenden Schritte beinhaltet:

    (a) Erzeugen eines ersten Satzes Werte;
    (b) Verarbeiten von mindestens einem Anteil des ersten Satzes Werte mit einer ersten Einwegfunktion, um einen entsprechenden Wert P zu erhalten;
    (c) Testen des Werts P auf Erfüllung einer mathematischen Randbedingung;
    (d) Bilden des kryptographischen Schlüssels K2 als eine Funktion des Werts P, wenn der Wert P die mathematische Randbedingung in Schritt (c) erfüllt; und
    (e) wenn der Wert P die mathematische Randbedingung in Schritt (c) nicht erfüllt, Wiederholen der Schritte (a), (b) und (c) wie erforderlich, um einen Wert P zu erhalten, der die mathematische Randbedingung in Schritt (c) erfüllt, und Bilden des kryptographischen Schlüssels K2 als eine Funktion des Werts P.

2.  Verfahren gemäß Anspruch 1, wobei:

    mindestens einer des ersten Satzes Werte zufällig erzeugt wird.

3.  Verfahren gemäß Anspruch 1 oder 2, wobei:

    der Schlüssel K2 ein Rivest, Shamir und Adleman-Schlüssel (RSA-Schlüssel) ist.

4.  Verfahren gemäß einem der Ansprüche 1 bis 3, wobei:

    die mathematische Randbedingung mit einem Elliptische-Kurven-Kryptosystem assoziiert wird.

5.  Verfahren gemäß einem der Ansprüche 1 bis 4, das die folgenden weiteren Schritte beinhaltet:

    (f) Verschlüsseln einer Nachricht Y, um eine verschlüsselte Nachricht X als eine Funktion des Schlüssels K2 zu bilden;
    (g) Übertragen der verschlüsselten Nachricht X über ein Breitbandkommunikationsnetz an einen Decodierer in einer Gesamtheit von Decodierern; und
    (h) Versehen des Decodierers mit Daten zur Verwendung beim Entschlüsseln der verschlüsselten Nachricht X.

6.  Verfahren gemäß einem der Ansprüche 1 bis 5, wobei:

    der Schritt (b) den Schritt des Verarbeitens von mindestens einem Anteil des ersten Satzes Werte mit der ersten Einwegfunktion beinhaltet, um einen entsprechenden ersten Satz verarbeitete Werte zu erhalten.

7.  Verfahren gemäß Anspruch 6, wobei der Schritt (b) den folgenden weiteren Schritt beinhaltet:

    Assemblieren des ersten Satzes verarbeitete Werte, um den Wert P zu bilden.

8.  Verfahren gemäß einem der Ansprüche 1 bis 7, wobei:

    die mathematische Randbedingung mit einem gewünschten Primheitsvertrauensgrad Primheit ist.

9.  Verfahren gemäß Anspruch 8, das die folgenden weiteren Schritte beinhaltet:

    (f) Erzeugen eines zweiten Werts Q aus einem zweiten Satz Werte;
    (g) Bilden von $\varphi = (P - 1) \cdot (Q - 1)$;
    (h) Erzeugen eines dritten Satzes Werte;

    (i) Verarbeiten von mindestens einem Anteil des dritten Satzes Werte mit einer Einwegfunktion davon, um einen entsprechenden Wert K1 zu erhalten;
    (j) Testen des Werts K1 auf relative Primheit hinsichtlich $\varphi$; und
    (k) wenn sich der Wert K1 in dem Schritt (j) nicht als relativ teilerfremd hinsichtlich $\varphi$ herausstellt, Wiederholen der Schritte (h), (i) und (j) wie erforderlich, um einen Wert K1 zu erhalten, der relativ teilerfremd zu $\varphi$ ist.

**10.** Verfahren gemäß Anspruch 9, wobei:

der Schritt (i) den Schritt des Verarbeitens von mindestens einem Anteil des dritten Satzes Werte mit der Einwegfunktion davon beinhaltet.

**11.** Verfahren gemäß Anspruch 9 oder 10, wobei:

der Schritt (j) bestimmt, dass der Wert K1 hinsichtlich $\varphi$ relativ teilerfremd ist, wenn ein größter gemeinsamer Teiler des Werts K1 und $\varphi$ eins ist.

**12.** Verfahren gemäß einem der Ansprüche 9 bis 11, wobei:

mindestens ein Anteil des zweiten Satzes Werte zufällig erzeugt wird.

**13.** Verfahren gemäß einem der Ansprüche 9 bis 12, wobei:

der zweite Wert Q in dem Schritt (f) durch das Verarbeiten von mindestens einem Anteil des zweiten Satzes Werte mit einer Einwegfunktion davon erzeugt wird.

**14.** Verfahren gemäß einem der Ansprüche 9 bis 13, wobei:

mindestens ein Anteil des dritten Satzes Werte zufällig erzeugt wird.

**15.** Verfahren gemäß einem der Ansprüche 9 bis 14, das die folgenden weiteren Schritte beinhaltet:

(l) Bilden eines Moduls N = P x Q; und
(m) Bilden einer verschlüsselten Nachricht X durch Verschlüsseln einer Nachricht Y als eine Funktion des Schlüssels K2 und des Moduls N.

**16.** Verfahren gemäß Anspruch 15, wobei:

der Schritt (m) den Schritt des Verschlüsselns der Nachricht Y beinhaltet, um die verschlüsselte Nachricht X = $Y^{K2}$ (mod N) zu bilden.

**17.** Verfahren zum Decodieren einer verschlüsselten Nachricht X an einem Decodierer, das die folgenden Schritte beinhaltet:

(a) Verarbeiten von mindestens einem Anteil eines ersten Satzes Werte mit einer ersten Einwegfunktion, um einen entsprechenden ersten Satz verarbeitete Werte zu erhalten;
(b) Bilden eines Werts P aus dem ersten Satz verarbeitete Werte;
(c) Erzeugen eines kryptographischen Schlüssels K1 aus einem zweiten Satz Werte; und
(d) Entschlüsseln der verschlüsselten Nachricht X als eine Funktion des kryptographischen Schlüssels K1 und des Werts P; wobei:

(i) die verschlüsselte Nachricht X an einem Codierer als eine Funktion eines kryptographischen Schlüssels K2 verschlüsselt ist, (ii) der Schlüssel K2 an dem Codierer gemäß dem Verfahren aus Anspruch 1 aus Werten einschließlich eines dritten Satzes Werte erzeugt wird, und (iii) mindestens ein Anteil des dritten Satzes Werte mit einer ersten Einwegfunktion davon entsprechend der ersten Einwegfunktion des Schritts (a) verarbeitet wird, um einen entsprechenden dritten Satz verarbeiteter Werte zu erhalten, die eine mathematische Randbedingung erfüllen.

**18.** Verfahren gemäß Anspruch 17, wobei:

mindestens einer des zweiten Satzes Werte zufällig erzeugt wird.

**19.** Verfahren gemäß Anspruch 17 oder 18, wobei:

der Schlüssel K1 ein Rivest, Shamir und Adleman-Schlüssel (RSA-Schlüssel) ist.

**20.** Verfahren gemäß einem der Ansprüche 17 bis 19, wobei:

die mathematische Randbedingung mit einem Elliptische-Kurven-Kryptosystem assoziiert ist.

**21.** Verfahren gemäß einem der Ansprüche 17 bis 20, wobei:

die verschlüsselte Nachricht X über ein Breitbandkommunikationsnetz von dem Codierer an eine Gesamtheit von Decodierern einschließlich des Decodierers übertragen wird.

**22.** Verfahren gemäß einem der Ansprüche 17 bis 21, wobei:

mindestens einer des ersten Satzes Werte zufällig erzeugt wird.

**23.** Verfahren gemäß einem der Ansprüche 17 bis 22, wobei:

mindestens einer des dritten Satzes Werte zufällig erzeugt wird.

**24.** Verfahren gemäß einem der Ansprüche 17 bis 23, wobei:

die mathematische Randbedingung an einem gewünschten Primheitsvertrauensgrad Primheit ist.

**25.** Verfahren gemäß einem der Ansprüche 17 bis 24, wobei der Schritt (b) den folgenden weiteren Schritt beinhaltet:

Assemblieren des ersten Satzes verarbeitete Werte, um den Wert P zu bilden.

**26.** Verfahren gemäß einem der Ansprüche 17 bis 25, wobei:

der Schritt (c) den Schritt des Verarbeitens von mindestens einem Anteil des zweiten Satzes Werte mit einer Einwegfunktion davon beinhaltet, um einen entsprechenden zweiten Satz verarbeitete Werte zu erhalten.

**27.** Verfahren gemäß Anspruch 26, wobei der Schritt (d) den folgenden Schritt beinhaltet:

Assemblieren des zweiten Satzes verarbeitete Werte, um den Schlüssel K1 zu bilden.

**28.** Verfahren gemäß einem der Ansprüche 17 bis 27, das die folgenden weiteren Schritte beinhaltet:

(d) Bereitstellen eines vierten Satzes Werte;
(e) Verarbeiten von mindestens einem Anteil des vierten Satzes Werte mit einer Einwegfunktion davon, um einen entsprechenden Wert Q zu erhalten; und
(f) Bilden eines Moduls $N = P \times Q$ zur Verwendung beim Entschlüsseln der verschlüsselten Nachricht X.

**29.** Verfahren gemäß Anspruch 28, wobei:

der vierte Satz Werte der gleiche ist wie der dritte Satz Werte.

**30.** Verfahren gemäß Anspruch 28 oder 29, wobei:

K2 und K1 durch $K2 = K_1^{-1} \bmod \varphi$ in Beziehung stehen, wobei $\varphi = (P - 1) \times (Q - 1).$

**31.** Verfahren gemäß einem der Ansprüche 28 bis 30, wobei mindestens ein Anteil des vierten Satzes Werte zufällig erzeugt wird.

**32.** Verfahren gemäß einem der Ansprüche 28 bis 31, wobei die verschlüsselte Nachricht X aus einer Nachricht Y an dem Codierer gemäß: $X = Y^{K2} \pmod N$ gebildet wird, das den folgenden weiteren Schritt beinhaltet:

(g) Entschlüsseln der verschlüsselten Nachricht X unter Verwendung des kryptographischen Schlüssels K1 und des Moduls N, um die Nachricht Y gemäß: $X^{K1} \pmod N$ zu erhalten.

**33.** Ein Codiererverfahren zum Erzeugen eines kryptographischen Schlüssels K2, das Folgendes beinhaltet:

Mittel (315, 320) zum Erzeugen eines ersten Satzes Werte;
Mittel (325) zum Verarbeiten von mindestens einem Anteil des ersten Satzes Werte mit einer ersten Einwegfunktion, um einen entsprechenden Wert P zu erhalten;
Mittel (345) zum Testen des Werts P zur Erfüllung einer mathematischen Randbedingung; und
Mittel (365) zum Bilden des kryptographischen Schlüssels K2 als eine Funktion des Werts P, wenn der Wert P die mathematische Randbedingung erfüllt;
wobei, wenn der Wert P die mathematische Randbedingung nicht erfüllt, das Erzeugungsmittel (315, 320) einen neuen ersten Satz Werte erzeugt, das Verarbeitungsmittel (325) den neuen ersten Satz Werte verarbeitet und das Testmittel (345) den neuen Wert P zur Erfüllung der mathematischen Randbedingung testet, bis der Wert P die mathematische Randbedingung erfüllt, und das Bildungsmittel (365) ausgeführt ist, um den kryptographischen Schlüssel K2 als eine Funktion des Werts P zu bilden.

**34.** Ein Decodierer zum Decodieren einer verschlüsselten Nachricht X, der Folgendes beinhaltet:

Mittel zum Erzeugen eines ersten Satzes Werte;
Mittel (615) zum Verarbeiten von mindestens einem Anteil des ersten Satzes Werte mit einer ersten Einwegfunktion, um einen entsprechenden ersten Satz verarbeitete Werte zu erhalten;
Mittel (610) zum Bilden eines Werts P aus dem ersten Satz verarbeitete Werte;
Mittel (610) zum Erzeugen eines kryptographischen Schlüssels K1 aus einem zweiten Satz Werte; und
Mittel (265) zum Entschlüsseln der verschlüsselten Nachricht X als eine Funktion des kryptographischen Schlüssels K1 und des Werts P; wobei:

(i) die verschlüsselte Nachricht X an einem Codierer (200) als eine Funktion eines kryptographischen Schlüssels K2 verschlüsselt ist,
(ii) der Schlüssel K2 an dem Codierer (200) gemäß dem Verfahren aus Anspruch 1 aus einem Satz Werte erzeugt wird, und (iii) mindestens ein Anteil des Satzes Werte des Schlüssels K2 mit einer ersten Einwegfunktion davon entsprechend der ersten Einwegfunktion des Schritts (b) verarbeitet wird, um einen entsprechenden Satz verarbeiteter Werte zu erhalten, die eine mathematische Randbedingung erfüllen

**Revendications**

**1.** Une méthode pour générer une clé cryptographique, K2, comportant les étapes de :

(a) générer un premier ensemble de valeurs ;
(b) traiter au moins une portion dudit premier ensemble de valeurs avec une première fonction unidirectionnelle pour obtenir une valeur correspondante P ;
(c) tester la valeur P pour voir si elle satisfait à une contrainte mathématique ;
(d) si la valeur P satisfait bien à ladite contrainte mathématique dans ladite étape (c), former ladite clé cryptographique K2 comme fonction de la valeur P ; et
(e) si la valeur P ne satisfait pas à ladite contrainte mathématique dans ladite étape (c), répéter lesdites étapes (a), (b) et (c) selon les besoins pour obtenir une valeur P qui satisfait à ladite contrainte mathématique dans ladite étape (c), et former ladite clé cryptographique K2 comme fonction de la valeur P.

**2.** La méthode de la revendication 1, dans laquelle :

au moins une valeur du premier ensemble de valeurs est générée de façon aléatoire.

**3.** La méthode de la revendication 1 ou de la revendication 2, dans laquelle :

la clé K2 est une clé Rivest, Shamir, et Adleman (RSA).

**4.** La méthode de l'une des revendications 1 à 3, dans laquelle :

ladite contrainte mathématique est associée à un Cryptosystème à courbe elliptique.

**5.** La méthode de l'une des revendications 1 à 4, comportant les étapes supplémentaires de :

(f) crypter un message Y pour former un message crypté X comme fonction de la clé K2 ;
(g) transmettre ledit message crypté X à un décodeur dans une population de décodeurs par le biais d'un réseau de communication à large bande ; et
(h) fournir des données au décodeur pour les utiliser dans le décryptage dudit message crypté X.

**6.** La méthode de l'une des revendications 1 à 5, dans laquelle :

ladite étape (b) comporte l'étape de traiter au moins une portion du premier ensemble de valeurs avec ladite fonction unidirectionnelle pour obtenir un premier ensemble correspondant de valeurs traitées.

**7.** La méthode de la revendication 6, dans laquelle ladite étape (b) comporte l'étape supplémentaire de :

assembler ledit premier ensemble de valeurs traitées pour former ladite valeur P.

**8.** La méthode de l'une des revendications 1 à 7, dans laquelle :

ladite contrainte mathématique est la primarité à un niveau de confiance de primarité souhaité.

**9.** La méthode de la revendication 8, comportant les étapes supplémentaires de :

(f) générer une deuxième valeur Q à partir d'un deuxième ensemble de valeurs ;
(g) former $\varphi=(P-1)\cdot(Q-1)$;
(h) générer un troisième ensemble de valeurs ;

(i) traiter au moins une portion dudit troisième ensemble de valeurs avec une fonction unidirectionnelle de celle-ci pour obtenir une valeur correspondante K1 ;
(j) tester la valeur K1 pour évaluer la primarité relative à $\varphi$ ; et
(k) si la valeur K1 ne se révèle pas être relativement primaire à $\varphi$ dans ladite étape (j), répéter lesdites étapes (h), (i) et (j) selon les besoins pour obtenir une valeur K1 qui est relativement primaire à $\varphi$.

**10.** La méthode de la revendication 9, dans laquelle :

ladite étape (i) comporte l'étape de traiter au moins une portion du troisième ensemble de valeurs avec ladite fonction unidirectionnelle de celle-ci.

**11.** La méthode de la revendication 9 ou de la revendication 10, dans laquelle :

ladite étape (j) détermine que la valeur K1 est relativement primaire à $\varphi$ lorsqu'un plus grand diviseur commun de la valeur K1 et de $\varphi$ est un.

**12.** La méthode de l'une des revendications 9 à 11, dans laquelle :

au moins une portion du deuxième ensemble de valeurs est générée de façon aléatoire.

**13.** La méthode de l'une des revendications 9 à 12, dans laquelle :

la deuxième valeur Q est générée dans ladite étape (f) en traitant au moins une portion du deuxième ensemble de valeurs avec une fonction unidirectionnelle de celle-ci.

**14.** La méthode de l'une des revendications 9 à 13, dans laquelle:

au moins une portion du troisième ensemble de valeurs est générée de façon aléatoire.

**15.** La méthode de l'une des revendications 9 à 14, comportant les étapes supplémentaires de :

(l) former un module N = P x Q ; et

**EP 1 234 404 B1**

(m) former un message crypté X en cryptant un message Y comme fonction de la clé K2 et du module N.

**16.** La méthode de la revendication 15, dans laquelle :

ladite étape (m) comporte l'étape de crypter ledit message Y pour former le message crypté X = $Y^{K2}$ (mod N).

**17.** Une méthode pour décoder un message crypté X au niveau d'un décodeur, comportant les étapes de :

(a) traiter au moins une portion d'un premier ensemble de valeurs avec une première fonction unidirectionnelle pour obtenir un premier ensemble correspondant de valeurs traitées ;
(b) former une valeur P à partir dudit premier ensemble de valeurs traitées ;
(c) générer une clé cryptographique K1 à partir d'un deuxième ensemble de valeurs ; et
(d) décrypter le message crypté X comme fonction de ladite clé cryptographique K1 et de ladite valeur P ; dans laquelle :

(i) ledit message crypté X est crypté au niveau d'un encodeur comme fonction d'une clé cryptographique K2, (ii) la clé K2 est générée au niveau de l'encodeur conformément à la méthode de la revendication 1 à partir de valeurs comprenant un troisième ensemble de valeurs, et (iii) au moins une portion du troisième ensemble de valeurs est traitée avec une première fonction unidirectionnelle de celle-ci correspondant à ladite première fonction unidirectionnelle de ladite étape (a) pour obtenir un troisième ensemble correspondant de valeurs traitées qui satisfont à une contrainte mathématique.

**18.** La méthode de la revendication 17, dans laquelle :

au moins une valeur du deuxième ensemble de valeurs est générée de façon aléatoire.

**19.** La méthode de la revendication 17 ou de la revendication 18, dans laquelle :

la clé K1 est une clé Rivest, Shamir, et Adleman (RSA).

**20.** La méthode de l'une des revendications 17 à 19, dans laquelle :

ladite contrainte mathématique est associée à un Cryptosystème à courbe elliptique.

**21.** La méthode de l'une des revendications 17 à 20, dans laquelle :

ledit message crypté X est transmis de l'encodeur à une population de décodeurs comprenant ledit décodeur par le biais d'un réseau de communication à large bande.

**22.** La méthode de l'une des revendications 17 à 21, dans laquelle :

au moins une valeur du premier ensemble de valeurs est générée de façon aléatoire.

**23.** La méthode de l'une des revendications 17 à 22, dans laquelle :

au moins une valeur du troisième ensemble de valeurs est générée de façon aléatoire.

**24.** La méthode de l'une des revendications 17 à 23, dans laquelle :

ladite contrainte mathématique est la primarité à un niveau de confiance de primarité souhaité.

**25.** La méthode de l'une des revendications 17 à 24, dans laquelle ladite étape (b) comporte l'étape supplémentaire de :

assembler ledit premier ensemble de valeurs traitées pour former ladite valeur P.

**26.** La méthode de l'une des revendications 17 à 25, dans laquelle :

ladite étape (c) comporte l'étape de traiter au moins une portion dudit deuxième ensemble de valeurs avec une fonction unidirectionnelle de celle-ci pour obtenir un deuxième ensemble correspondant de valeurs traitées.

**27.** La méthode de la revendication 26, dans laquelle ladite étape (d) comporte l'étape de :

assembler ledit deuxième ensemble de valeurs traitées pour former la clé K1.

**28.** La méthode de l'une des revendications 17 à 27, comportant les étapes supplémentaires de :

(d) fournir un quatrième ensemble de valeurs ;
(e) traiter au moins une portion dudit quatrième ensemble de valeurs avec une fonction unidirectionnelle de celle-ci pour obtenir une valeur correspondante Q ; et
(f) former un module N = P x Q destiné à être utilisé pour décrypter le message crypté X.

**29.** La méthode de la revendication 28, dans laquelle :

le quatrième ensemble de valeurs est le même que le troisième ensemble de valeurs.

**30.** La méthode de la revendication 28 ou de la revendication 29, dans laquelle :

K2 et K1 sont mis en relation par $K2 = K_1^{-1} \bmod \varphi$, où $\boldsymbol{\varphi = (P - 1) \times (Q - 1)}$.

**31.** La méthode de l'une des revendications 28 à 30, dans laquelle au moins une portion du quatrième ensemble de valeurs est générée de façon aléatoire.

**32.** La méthode de l'une des revendications 28 à 31, dans laquelle ledit message crypté X est formé à partir d'un message Y au niveau de l'encodeur selon : $X = Y^{K2} \pmod N$, comportant l'étape supplémentaire de :

(g) décrypter le message crypté X à l'aide de ladite clé cryptographique K1 et dudit module N pour obtenir ledit message Y selon : $X^{K1} \pmod N$.

**33.** Un encodeur destiné à générer une clé cryptographique, K2, comportant :

des moyens (315, 320) destinés à générer un premier ensemble de valeurs ;
un moyen (325) destiné à traiter au moins une portion dudit premier ensemble de valeurs avec une première fonction unidirectionnelle pour obtenir une valeur correspondante P ;
un moyen (345) destiné à tester la valeur P pour voir si elle satisfait à une contrainte mathématique ; et
un moyen (365) destiné à former ladite clé cryptographique K2 comme fonction de la valeur P si la valeur P satisfait bien à ladite contrainte mathématique ;
dans lequel si la valeur P ne satisfait pas à ladite contrainte mathématique, lesdits moyens de génération (315, 320) génèrent un nouveau premier ensemble de valeurs, ledit moyen de traitement (325) traite le nouveau premier ensemble de valeurs, et ledit moyen de test (345) teste la nouvelle valeur P pour voir si elle satisfait à la contrainte mathématique jusqu'à ce que la valeur P satisfasse à ladite contrainte mathématique, et ledit moyen de formation (365) est adapté pour former ladite clé cryptographique K2 comme fonction de la valeur P.

**34.** Un décodeur destiné à décoder un message crypté X, comportant :

un moyen destiné à générer un premier ensemble de valeurs ;
un moyen (615) destiné à traiter au moins une portion dudit premier ensemble de valeurs avec une première fonction unidirectionnelle pour obtenir un premier ensemble correspondant de valeurs traitées ;
un moyen (610) destiné à former une valeur P à partir dudit premier ensemble de valeurs traitées ;
un moyen (610) destiné à générer une clé cryptographique K1 à partir d'un deuxième ensemble de valeurs ; et
un moyen (265) destiné à décrypter le message crypté X comme fonction de ladite clé cryptographique K1 et de ladite valeur P ; dans lequel :

(i) ledit message crypté X est crypté au niveau d'un encodeur (200) comme fonction d'une clé cryptographique K2, (ii) la clé K2 est générée au niveau de l'encodeur (200) conformément à la méthode de la revendication 1 à partir d'un ensemble de valeurs de celle-ci, et (iii) au moins une portion de l'ensemble de valeurs de la clé K2 est traitée avec une première fonction unidirectionnelle de celle-ci correspondant à ladite première fonction unidirectionnelle de ladite étape (b) pour obtenir un ensemble correspondant de valeurs traitées qui satisfont à une contrainte mathématique.

FIG.1

PERCENTAGE OF NUMBERS THAT ARE PRIME

BITS IN PRIME NUMBER

FIG.2

**200'**

| 310 | 315 | 320 | 325 | 330 | 230 |
|---|---|---|---|---|---|
| CPU | RANDOM BIT GENERATOR | BIT SUBDIVIDER/ ASSEMBLER | ONE-WAY FUNCTION | DISCARD FUNCTION | ENCRYPTOR |

**305**

| 340 | 345 | 350 | 355 | 360 | 365 |
|---|---|---|---|---|---|
| MEMORY | PRIME TESTER | MODULUS CALCULATOR $N=PQ$ | EULER'S TOTIENT $\phi=(P-1)(Q-1)$ | EUCLID'S ALGORITHM $GCD(K1,\phi)$ | EUCLID'S EXTENDED ALGORITHM $K_2=K_1^{-1}MOD\phi$ |

FIG.3

START

400 — GENERATE 512 RANDOM BITS

430 — GENERATE 512 RANDOM BITS

405 — SUBDIVIDE BITS INTO SUBSETS PRE-P1,..., PRE-P8

435 — SUBDIVIDE BITS INTO SUBSETS PRE-Q1,..., PRE-Q8

410 — PROCESS PRE-P1,..., PRE-P8 WITH ONE-WAY FUNCTION TO OBTAIN P1,..., P8

440 — PROCESS PRE-Q1,..., PRE-Q8 WITH ONE-WAY FUNCTION TO OBTAIN Q1,..., Q8

415 — ASSEMBLE P1,..., P8 TO FORM P

445 — ASSEMBLE Q1,..., Q8 TO FORM Q

420 — IS P PRIME?    NO

450 — IS Q PRIME?    NO

455 — FORM MODULUS N=PQ

YES    YES

460 — FORM EULER'S TOTIENT $\phi=(P-1)(Q-1)$

465 — GO TO "A"

FIG.4(a)

500 — "A"

505 — GENERATE 1024 RANDOM BITS

510 — SUBDIVIDE BITS INTO SUBSETS PRE-K1-1,..., PRE-K1-16

515 — PROCESS PRE-K1-1,..., PRE-K1-16 WITH ONE-WAY FUNCTION TO OBTAIN K1-1,..., K1-16

520 — ASSEMBLE K1-1,..., K1-16 TO FORM K1

525 — IS K1 RELATIVELY PRIME TO $\emptyset$ I.E., GCD(K1,$\emptyset$)=1?

NO

YES

530 — FORM $K_2 = K_1^{-1} \bmod \emptyset$

535 — ENCRYPT MESSAGE Y UNDER K2 AND N

540 — DISCARD P, Q AND $\emptyset$

550 — TRANSMIT ENCRYPTED MESSAGE X TO DECODER

FIG.4(b)

260'

615 ONE-WAY FUNCTION

610 BIT SUBDIVIDER/ASSEMBLER

602 CPU

605

265 DECRYPTOR

625 MODULUS CALCULATOR N=PQ

620 MEMORY

FIG.5

FORM MODULUS N=PQ — 725

PROCESS PRE-P1,...,
PRE-P8 WITH ONE-WAY
FUNCTION TO OBTAIN
P1,..., P8
— 705

PROCESS PRE-K1-1,...,
PRE-K1-16 WITH ONE-
WAY FUNCTION TO
OBTAIN K1-1,..., K1-16
— 730

ASSEMBLE P1,..., P8
TO FORM P
— 710

DISCARD PRE-K1-1,...,
PRE-K1-16
— 732

PROCESS PRE-Q1,...,
PRE-Q8 WITH ONE-WAY
FUNCTION TO OBTAIN
Q1,..., Q8
— 715

ASSEMBLE K1-1,...,
K1-16 TO FORM K1
— 735

ASSEMBLE Q1,..., Q8
TO FORM Q
— 720

DECRYPT ENCRYPTED
MESSAGE UNDER K1
AND N
— 740

# FIG.6